# EUROPEAN PATENT APPLICATION

(11) **EP 4 350 458 A1**
(43) Date of publication of application: **10.04.2024**
(21) Application number: 22815258.3
(22) Date of filing: 31.05.2022
(51) Int. Cl.: G05D 1/02

(54) **MULTI-MACHINE COLLABORATION METHOD, SCHEDULING DEVICE, AND MULTI-MACHINE COLLABORATION SYSTEM**

(30) Priority: 01.06.2021 CN 202110610324
(71) Applicant: Positec Power Tools (Suzhou) Co., Ltd., Suzhou, Jiangsu 215123 (CN)
(72) Inventor: HE, Mingming, Suzhou, Jiangsu 215123 (CN); WU, Shuanglong, Suzhou, Jiangsu 215123 (CN); GAO, Don Zhendong, Suzhou, Jiangsu 215123 (CN); ZHA, Xiahong, Suzhou, Jiangsu 215123 (CN); LIU, Changhua, Suzhou, Jiangsu 21523 (CN)
(74) Representative: Kilburn & Strode LLP
(86) International application number: PCT/CN2022/096175
(87) International publication number: WO 2022/253213

(57) **Abstract**

The present specification relates to the field of autonomous robot technologies and provides a multi-machine cooperation method, a scheduling device, and a multi-machine cooperation system. The multi-machine cooperation method includes: determining, by a first autonomous robot when detecting an abnormal condition during operation, whether the abnormal condition can be independently processed; and when the abnormal condition cannot be independently processed, sending, by the first autonomous robot, an assistance request to another device in an Internet of Things in which the first autonomous robot is located. In the present specification, a multi-machine cooperation operation between autonomous robots or between an autonomous robot and another device can be implemented.

## Description

### BACKGROUND

### Technical Field

The present specification relates to the field of autonomous robot technologies, and in particular, to a multi-machine cooperation method, a scheduling device, and a multi-machine cooperation system.

### Related Art

An autonomous robot (for example, an intelligent lawn mower) may generally complete a specific work task independently. However, in some cases, some work tasks are difficult for a single autonomous robot to independently complete. Therefore, how to implement a multi-machine cooperation operation between autonomous robots to complete a work task that is difficult for a single autonomous robot to independently complete has become an urgent technical problem to be resolved.

### SUMMARY

An objective of embodiments of the present specification is to provide a multi-machine cooperation method, a scheduling device, and a multi-machine cooperation system, to implement a multi-machine cooperation operation between autonomous robots or between an autonomous robot and another device.

To achieve the objective, in an aspect, an embodiment of the present specification provides a multi-machine cooperation method, including:
at a first autonomous robot:
performing an operation on a ground in a working region, determining, when detecting an abnormal condition during operation, a working policy required to eliminate the abnormal condition, where the abnormal condition refers to an unexpected condition during the operation of the first autonomous robot, and determining, based on the working policy and a work type that can be processed by the first autonomous robot, whether the abnormal condition can be independently processed; and when the abnormal condition cannot be independently processed, sending, by the first autonomous robot, an assistance request to another device in an Internet of Things in which the first autonomous robot is located.

The abnormal condition includes an abnormal object, and the abnormal object is generally an unexpected object. For example, a height to be detected is preset when a machine or a device uses an ultrasonic sensor. If an object ahead exceeds the detection height, the object is considered as an abnormal object. If a visual sensor is used and an unexpected object appears in a picture and is not a previously learned object, the unexpected object is considered as an abnormal object.

Optionally, the first autonomous robot is an autonomous robot having a scheduling function, and the sending, by the first autonomous robot, an assistance request to another device in an Internet of Things in which the first autonomous robot is located includes: receiving, by the first autonomous robot, status information of the another device, and determining, according to the status information, whether there is a second autonomous robot that can independently process the abnormal condition in the Internet of Things; and when there is the second autonomous robot that can independently process the abnormal condition in the Internet of Things, sending, by the first autonomous robot, a scheduling instruction to the second autonomous robot, where the scheduling instruction includes a scheduling path for the second autonomous robot to reach a specified position, so that the second autonomous robot reaches the specified position according to the scheduling instruction to process the abnormal condition.

Optionally, the method further includes: receiving, by the first autonomous robot, a processed signal sent by the second autonomous robot, where the processed signal is sent by the second autonomous robot after processing the abnormal condition; and
sending, by the first autonomous robot, a return instruction to the second autonomous robot, where the return instruction includes a return path for the second autonomous robot to return to a position before processing the abnormal condition, so that the second autonomous robot returns, according to the return instruction, to the position before processing the abnormal condition, to continue executing an interrupted operation of the second autonomous robot.

Optionally, the method further includes: when a waiting time after the first autonomous robot sends the scheduling instruction to the second autonomous robot reaches a preset waiting time, or when the first autonomous robot receives a reply signal fed back by the second autonomous robot, leaving, by the first autonomous robot, a target position at which the abnormal condition is detected and continuing executing the operation.

Optionally, the method further includes: when the first autonomous robot receives the processed signal sent by the second autonomous robot, returning, by the first autonomous robot, to the target position at a specified moment, and performing the operation on the target position or a region within a preset range of the target position.

Optionally, the step of determining, according to the status information, whether there is a second autonomous robot that can independently process the abnormal condition in the Internet of Things includes:
determining, by the first autonomous robot according to the status information, whether there is an autonomous robot of which an executable work type matches a work type for eliminating the abnormal condition or a functional component matches a functional component for eliminating the abnormal condition in the another device, and if a result is yes, determining that the autonomous robot meets an assistance condition; and
if only one autonomous robot meets the assistance condition, determining the autonomous robot meeting the assistance condition as the second autonomous robot; or
if a plurality of autonomous robots meet the assistance condition, selecting, according to a first screening rule, one autonomous robot from the plurality of autonomous robots meeting the assistance condition as the second autonomous robot.

Optionally, the method further includes: when there is no second autonomous robot that can independently process the abnormal condition in the Internet of Things, calling, by the first autonomous robot, pre-stored position information of a working head station and a working head list of the working head station, where the working head station has a plurality of working head placement positions, at least one working head is pre-placed at each placement position, a working head identifier is set at each working head placement position or a working head identifier is set on each working head, and the working head identifier includes a working head type or work type information that can be executed by a working head; and when there is a working head that can eliminate the abnormal condition in the working head list, selecting, according to the feedback status information, an autonomous robot that can identify a working head identifier from the another device, and sending a replacement instruction to the autonomous robot, where the replacement instruction includes a return path for the autonomous robot to move to the working head station and the working head identifier of the working head that can eliminate the abnormal condition, so that the autonomous robot mounts, according to the replacement instruction, the working head that can eliminate the abnormal condition.

Optionally, the first autonomous robot is an autonomous robot having a scheduling function, and the sending, by the first autonomous robot, an assistance request to another device in an Internet of Things in which the first autonomous robot is located includes: when there is no second autonomous robot that can independently process the abnormal condition in the Internet of Things, selecting, by the first autonomous robot, one autonomous robot from the another device, and controlling the autonomous robot to mount a working head that can independently process the abnormal condition; or when there is no second autonomous robot that can independently process the abnormal condition in the Internet of Things, mounting, by the first autonomous robot, a working head that can independently process the abnormal condition.

Optionally, the first autonomous robot is an autonomous robot having a scheduling function, and the sending, by the first autonomous robot, an assistance request to another device in an Internet of Things in which the first autonomous robot is located includes: receiving, by the first autonomous robot, status information of the another device, and determining, according to the status information, whether there is a third autonomous robot that can assist in processing the abnormal condition in the Internet of Things; and when there is the third autonomous robot that can assist in processing the abnormal condition in the Internet of Things, sending, by the first autonomous robot, a scheduling instruction to the third autonomous robot, where the scheduling instruction includes a scheduling path for the third autonomous robot to reach a specified position, so that the third autonomous robot reaches the specified position according to the scheduling instruction, and the first autonomous robot processes the abnormal condition in cooperation with the third autonomous robot.

Optionally, the processing the abnormal condition in cooperation with the third autonomous robot includes: sending, by the first autonomous robot, an action instruction to the third autonomous robot; and when the first autonomous robot receives receiving confirmation information returned by the third autonomous robot for the action instruction, performing, by the first autonomous robot and the third autonomous robot, an action corresponding to the action instruction according to the action instruction, so that the first autonomous robot and the third autonomous robot cooperatively process the abnormal condition.

Optionally, the method further includes: when there is no third autonomous robot that can assist in processing the abnormal condition in the Internet of Things, calling, by the first autonomous robot, pre-stored position information of a working head station and a working head list of the working head station, where the working head station has a plurality of working head placement positions, at least one working head is pre-placed at each placement position, a working head identifier is set at each working head placement position or a working head identifier is set on each working head, and the working head identifier includes a working head type or work type information that can be executed by a working head; and when there is a working head that can assist in processing the abnormal condition in the working head list, selecting, according to the feedback status information, an autonomous robot that can identify a working head identifier from the another device, and sending a replacement instruction to the autonomous robot, where the replacement instruction includes a return path for the autonomous robot to move to the working head station and the working head identifier of the working head that can assist in processing the abnormal condition, so that the autonomous robot moves, according to the replacement instruction, to the working head station and mounts the working head that can assist in processing the abnormal condition.

Optionally, the first autonomous robot is an autonomous robot that does not have a scheduling function, and the sending, by the first autonomous robot, an assistance request to another device in an Internet of Things in which the first autonomous robot is located includes: sending, by the first autonomous robot, the assistance request to an autonomous robot having the scheduling function or a scheduling system, so that the autonomous robot having the scheduling function or the scheduling system determines a processing policy corresponding to the abnormal condition according to the assistance request, and when the processing policy is an independent processing policy, schedules, according to the independent processing policy, a second autonomous robot that can independently process the abnormal condition; and when the processing policy is a cooperative processing policy, schedules, according to the cooperative processing policy, a third autonomous robot that can assist in processing the abnormal condition.

Optionally, the first autonomous robot is an autonomous robot having a scheduling function, and the sending, by the first autonomous robot, an assistance request to another device in an Internet of Things in which the first autonomous robot is located includes:
when there is no third autonomous robot that can assist in processing the abnormal condition in the Internet of Things, selecting, by the first autonomous robot, one or more autonomous robots from the another device, and controlling the autonomous robot to mount a working head that can assist in processing the abnormal condition.

Optionally, the first autonomous robot is an autonomous robot that does not have a scheduling function, and the sending, by the first autonomous robot, an assistance request to another device in an Internet of Things in which the first autonomous robot is located includes:
sending, by the first autonomous robot, the assistance request to an autonomous robot having the scheduling function or a scheduling system, so that the autonomous robot having the scheduling function or the scheduling system schedules, according to the assistance request, a second autonomous robot that can independently process the abnormal condition.

Optionally, the first autonomous robot is an autonomous robot that does not have a scheduling function, and the sending, by the first autonomous robot, an assistance request to another device in an Internet of Things in which the first autonomous robot is located includes:
sending, by the first autonomous robot, the assistance request to an autonomous robot having the scheduling function or a scheduling system, so that the autonomous robot having the scheduling function or the scheduling system schedules, according to the assistance request, a third autonomous robot that can assist in processing the abnormal condition.

Optionally, the determining, by the first autonomous robot when detecting an abnormal condition during operation, whether the abnormal condition can be independently processed includes: monitoring, by the first autonomous robot, an ambient environment during the operation; if detecting the abnormal condition in the ambient environment, acquiring, by the first autonomous robot, information about the abnormal condition, and determining, based on the information about the abnormal condition, whether the abnormal condition affects normal running of the first autonomous robot, to determine whether the abnormal condition needs to be processed; and if the abnormal condition needs to be processed, performing, by the first autonomous robot, the step of determining a working policy required to eliminate the abnormal condition and determining, based on the working policy and a work type that can be processed by the first autonomous robot, whether the abnormal condition can be independently processed.

Optionally, the determining, by the first autonomous robot when detecting an abnormal condition during operation, whether the abnormal condition can be independently processed comprises:
monitoring, by the first autonomous robot, an ambient environment during the operation;
if detecting the abnormal condition in the ambient environment, determining, by the first autonomous robot, whether the abnormal condition needs to be processed; and
if the abnormal condition needs to be processed, determining, by the first autonomous robot, whether the abnormal condition can be independently processed.

Optionally, the determining whether the abnormal condition can be independently processed includes:
if the first autonomous robot can process the abnormal condition in a manner of replacing a working head or can avoid the abnormal condition by going around, determining, by the first autonomous robot, that the abnormal condition can be independently processed.

Optionally, the method further includes:
after the first autonomous robot can completely process the abnormal condition in the manner of replacing the working head, replacing the working head again to continue executing a previously interrupted work.

Optionally, when the another device includes an autonomous robot, the first autonomous robot sends the assistance request by using a v2v communication protocol.

In another aspect, an embodiment of the present specification provides a multi-machine cooperation method, including: receiving an assistance request sent by a first autonomous robot, where the assistance request is sent when the first autonomous robot performs an operation on a ground in a working region, detects an abnormal condition during operation, and determines that the abnormal condition cannot be independently processed; and sending a scheduling instruction to another device in an Internet of Things according to the assistance request, to process the abnormal condition.

Optionally, the sending a scheduling instruction to another device in an Internet of Things according to the assistance request includes:
receiving status information of the another device, and determining, according to the status information, whether there is a second autonomous robot that can independently process the abnormal condition in the Internet of Things;
when there is the second autonomous robot that can independently process the abnormal condition in the Internet of Things, sending the scheduling instruction to the second autonomous robot, where the scheduling instruction includes a scheduling path for the second autonomous robot to reach a specified position, so that the second autonomous robot reaches the specified position according to the scheduling instruction to process the abnormal condition;
when there is no second autonomous robot that can independently process the abnormal condition in the Internet of Things, calling pre-stored position information of a working head station and a working head list of the working head station, where the working head station has a plurality of working head placement positions, at least one working head is pre-placed at each placement position, a working head identifier is set at each working head placement position or a working head identifier is set on each working head, and the working head identifier includes a working head type or work type information that can be executed by a working head; and when there is a working head that can eliminate the abnormal condition in the working head list, selecting, according to the feedback status information, an autonomous robot that can identify a working head identifier from the another device, and sending a replacement instruction to the autonomous robot, where the replacement instruction includes a return path for the autonomous robot to move to the working head station and the working head identifier of the working head that can eliminate the abnormal condition, so that the autonomous robot mounts, according to the replacement instruction, the working head that can eliminate the abnormal condition.

Optionally, the sending a scheduling instruction to another device in an Internet of Things according to the assistance request includes:
receiving status information of the another device, and determining, according to the status information, whether there is a third autonomous robot that can assist in processing the abnormal condition in the Internet of Things;
when there is the third autonomous robot that can assist in processing the abnormal condition in the Internet of Things, sending the scheduling instruction to the third autonomous robot, where the scheduling instruction includes a scheduling path for the third autonomous robot to reach a specified position, so that the third autonomous robot reaches the specified position according to the scheduling instruction, and the first autonomous robot processes the abnormal condition in cooperation with the third autonomous robot;
when there is no third autonomous robot that can assist in processing the abnormal condition in the Internet of Things, calling pre-stored position information of a working head station and a working head list of the working head station, where the working head station has a plurality of working head placement positions, at least one working head is pre-placed at each placement position, a working head identifier is set at each working head placement position or a working head identifier is set on each working head, and the working head identifier includes a working head type or work type information that can be executed by a working head; and when there is a working head that can assist in processing the abnormal condition in the working head list, selecting, according to the feedback status information, an autonomous robot that can identify a working head identifier from the another device, and sending a replacement instruction to the autonomous robot, where the replacement instruction includes a return path for the autonomous robot to move to the working head station and the working head identifier of the working head that can assist in processing the abnormal condition, so that the autonomous robot moves, according to the replacement instruction, to the working head station and mounts the working head that can assist in processing the abnormal condition.

Optionally, the method further includes: in the cooperative processing process, simultaneously sending, according to an action corresponding to the abnormal condition, an action instruction corresponding to the action to the first autonomous robot and the third autonomous robot, to control synchronous action of the first autonomous robot and the third autonomous robot; and when there are a plurality of actions, sending each action instruction according to an execution sequence of the actions corresponding to the abnormal condition, and sending a next action instruction after the first autonomous robot and the third autonomous robot completely execute an action corresponding to one action instruction; or selecting one of the first autonomous robot and the third autonomous robot as a main control robot, and simultaneously sending, by the main control robot according to an action corresponding to the abnormal condition, an action instruction corresponding to the action to the first autonomous robot and the third autonomous robot, to control synchronous action of the first autonomous robot and the third autonomous robot.

Optionally, the method further includes: pre-recording positions of the first autonomous robot and the third autonomous robot before processing the abnormal condition, and after receiving cooperative processing completion signals fed back by the third autonomous robot and the first autonomous robot for the abnormal condition, respectively sending a first return instruction to the first autonomous robot and a third return instruction to the third autonomous robot, where the first return instruction includes the position of the first autonomous robot before processing the abnormal condition, and the third return instruction includes the position of the third autonomous robot before processing the abnormal condition, so that the first autonomous robot and the third autonomous robot respectively return, according to the first return instruction and the third return instruction, to the positions before processing the abnormal condition, and the first autonomous robot and the third autonomous robot can respectively execute respective interrupted operations.

Optionally, the first autonomous robot is an autonomous robot that does not have a scheduling function, and the sending a scheduling instruction to another device in an Internet of Things according to the assistance request includes:
when there is the second autonomous robot that can independently process the abnormal condition in the Internet of Things, scheduling the second autonomous robot to reach a specified position, so that the second autonomous robot processes the abnormal condition; and
when there is no second autonomous robot that can independently process the abnormal condition in the Internet of Things, selecting one autonomous robot from the another device, and controlling the autonomous robot to mount a working head that can independently process the abnormal condition; or controlling the first autonomous robot to mount a working head that can independently process the abnormal condition.

Optionally, the first autonomous robot is an autonomous robot that does not have a scheduling function, and the sending a scheduling instruction to another device in an Internet of Things according to the assistance request includes:
when there is the third autonomous robot that can assist in processing the abnormal condition in the Internet of Things, scheduling the third autonomous robot to reach a specified position, so that the third autonomous robot and the first autonomous robot cooperatively process the abnormal condition; and
when there is no third autonomous robot that can assist in processing the abnormal condition in the Internet of Things, selecting one autonomous robot from the another device, and controlling the autonomous robot to mount a working head that can assist in processing the abnormal condition as the third autonomous robot.

Optionally, the method further includes:
in the cooperative processing process, controlling synchronous action of the first autonomous robot and the third autonomous robot; or selecting one of the first autonomous robot and the third autonomous robot as a main control robot, and controlling, by the main control robot, synchronous action of the first autonomous robot and the third autonomous robot.

Optionally, the method further includes:
after the third autonomous robot and the first autonomous robot cooperatively process the abnormal condition, controlling the first autonomous robot and the third autonomous robot to return to respective positions before processing the abnormal condition, so that the first autonomous robot and the third autonomous robot respectively perform interrupted operations.

In another aspect, an embodiment of the present specification further provides a scheduling device, including a memory, a processor, and a computer program stored on the memory, where the computer program, when executed by the processor, executes instructions of the method.

In another aspect, an embodiment of the present specification further provides a multi-machine cooperation system, including a plurality of autonomous robots, where the plurality of autonomous robots are connected with each other to form an Internet of Things, and each autonomous robot in the Internet of Things implements multi-machine cooperation according to the method.

Optionally, one autonomous robot having a scheduling function in the plurality of autonomous robots and another autonomous robot that receives scheduling of the autonomous robot having the scheduling function implement multi-machine cooperation.

Optionally, a scheduling system is further included, and the plurality of autonomous robots are connected to the scheduling system to receive scheduling the scheduling system.

Optionally, the scheduling system is a local control center or a cloud control center.

It can learned from the technical solution provided in the embodiments of the present specification that in the embodiments of the present specification, when meeting an abnormal condition (for example, an abnormal object or an abnormal environment) that cannot be independently processed during operation, the first autonomous robot may send an assistance request to another device in an Internet of Things in which the first autonomous robot is located, to process the abnormal condition, so that a multi-machine cooperation operation between autonomous robots or between an autonomous robot and another device is implemented, thereby improving operation performance of the autonomous robot.

### BRIEF DESCRIPTION OF THE DRAWINGS

To describe the technical solutions in the embodiments of this specification or in existing technologies more clearly, the following briefly introduces the accompanying drawings required for describing the embodiments or the prior art. Apparently, the accompanying drawings in the following description show merely some embodiments of the present specification, and a person of ordinary skill in the art may still derive other drawings from these accompanying drawings without creative efforts. In the accompanying drawings:
FIG. 1 is a schematic diagram of a shape of an autonomous robot according to some embodiments of the present specification;
FIG. 2 is a flowchart of a multi-machine cooperation method of a first autonomous robot according to some embodiments of the present specification;
FIG. 3 is a flowchart of a multi-machine cooperation method of an autonomous robot according to some other embodiments of the present specification;
FIG. 4 is a schematic diagram in which an autonomous robot A replaces a working head according to an embodiment of the present specification;
FIG. 5 is a schematic diagram in which an autonomous robot A sends an assistance request to a plurality of autonomous robots based on a V2V communication protocol according to an embodiment of the present specification;
FIG. 6 is a schematic diagram in which an autonomous robot B assists in processing a working object according to an embodiment of the present specification;
FIG. 7 is a schematic diagram in which an autonomous robot B assists in processing a working object after replacing a working head according to an embodiment of the present specification;
FIG. 8 is a schematic diagram in which an autonomous robot A sends an assistance request to a plurality of autonomous robots by using a scheduling system according to an embodiment of the present specification;
FIG. 9 is a schematic diagram in which an autonomous robot A and an autonomous robot B cooperatively process an abnormal object according to an embodiment of the present specification;
FIG. 10 is a flowchart of multi-machine cooperation interaction according to an embodiment of the present specification;
FIG. 11 is a schematic diagram of an around house intelligent system according to an embodiment of the present specification; and
FIG. 12 shows a structural block diagram of a scheduling device according to an embodiment of the present specification.

Descriptions of numerals in the drawings:
100. Autonomous robot; 200: Working region; 300: Abnormal object; 1200: Scheduling device; 1204: processor; 1206: Memory 1208: Driving mechanism; 1210: Input/output interface; 1212: Input device; 1214: Output device; 1216: Presentation device; 1218: Graphic user interface; 1220: Network interface; 1222: Communication link; and 1224: Communication bus.

### DETAILED DESCRIPTION

To enable a person skilled in the art to better understand the technical solutions in this specification, the technical solutions of the embodiments of this specification will be described clearly and thoroughly below with reference to the accompanying drawings of the embodiments of this specification. Apparently, the described embodiments are merely some rather than all of the embodiments of this specification. All other embodiments obtained by a person of ordinary skill in the art based on the embodiments of this specification without creative efforts shall fall within the protection scope of this specification.

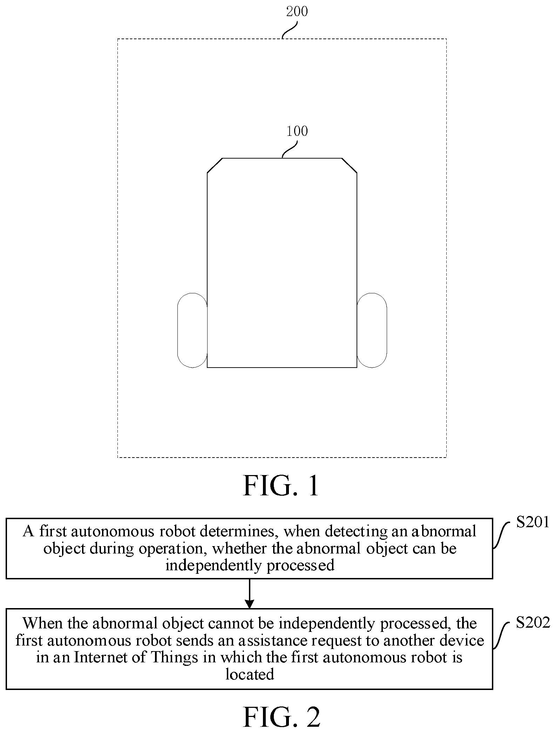

Referring to FIG. 1, in some embodiments of the present specification, an autonomous robot 100 (or referred to as a self-moving robot or an intelligent robot) is a robot that is provided with various necessary sensors and control devices and can independently complete a specific task without external human information input and control in a running process, that is, the autonomous robot 100 can autonomously move in a working region 200 and execute an operation task. Generally, a typical autonomous robot 100 may include a body, a walking device, an operation execution device (or referred to as a working head), a control device, and the like. The walking device may support the body and may drive the autonomous robot to move on a working surface. The operation execution device may be mounted on the body and may execute a work task in a working region. The control device may control the walking device and the operation execution device.

A person skilled in the art may understand that, the autonomous robot may be understood as a device for executing a specific function by means of a necessary hardware device and/or software program such as a controller and a functional component, for example, an intelligent lawn mower for executing a mowing function or a window closer for executing a window closing function. This is not specifically limited in this application.

In some exemplary embodiments of the present specification, the autonomous robot 100 may include, but not limited to, an intelligent lawn mower, an automatic cleaning device, an automatic pouring device, an automatic snowplow, or the like.

In some embodiments of the present specification, some autonomous robots may execute a work task according to a pre-planned walking path (for example, a zigzag-shaped path or a hollow square path). The walking path may be pre-planned according to information such as a contour of a working region and obstacle distribution in the working region. However, for some reasons (for example, an abnormal environment and an unexpected object occur in the working region after the walking path is planned), when executing a work task, the autonomous robot may find that some work tasks are difficult for a single autonomous robot to independently complete. However, in view of the fact that the autonomous robot generally works independently at present, how to implement multi-machine cooperation between autonomous robots (or between an autonomous robot and another device) to complete a work task that is difficult for a single autonomous robot to independently complete has become an urgent technical problem to be resolved at present.

In view of this, embodiments of the present specification provide multi-machine cooperation technologies that may be applied to a multi-machine cooperation operation between autonomous robots and between an autonomous robot and another device (for example, a scheduling device such as a scheduling system or a robot having a scheduling function). The scheduling system may be a cloud scheduling system or a local scheduling system. The local scheduling system may be, for example, an autonomous robot base station or a charging station configured with a scheduling function. The following describes in detail the multi-machine cooperation technology in combination with the embodiments of the present specification.

In an embodiment, there is a scheduling device in an Internet of Things, for example, a scheduling robot or a scheduling system. The scheduling system is used as an example. Each device in the Internet of Things establishes a connection with the scheduling system, and after the connection is established, reports a position of each device to the scheduling system at a regular time interval, and the scheduling system determines a distance between the device and a first autonomous robot according to the reported position of the device. In addition, all machines that may be connected to the scheduling system set parameters of the machines (for example, a work that can be completed) in the scheduling system before formally running. The scheduling system may determine, according to these parameters, which machines may assist A in working.

A person skilled in the art should understand that "cooperative", "cooperative processing", and the like mentioned in the embodiments of the present specification may refer to synchronous action of two or more autonomous robots when executing a same work task. For example, if an action instruction set of a work task may include single small actions such as lowering, grabbing, lifting, and transferring, when performing each small action, two or more autonomous robots may synchronously perform the action. It should be further noted that a processing policy of the cooperative processing may be pre-configured, or may be autonomously determined by the autonomous robot or the scheduling system based on a preset algorithm.

Specifically, information exchange is required for cooperative processing of abnormal objects. Such information may be exchanged through the scheduling system or by two machines directly.

If exchange is performed through the scheduling system, the scheduling system simultaneously sends an action instruction to two machines A and B. After completing execution, the machines A and B return execution completion messages to the scheduling system, and the scheduling system sends a next action instruction again, and so on, until completion. Finally, the scheduling system schedules A and B respectively back to positions before processing a work object (which are not a same place, the scheduling system records a position of A when A requests cooperative processing, and records a position of B when B assists A).

If two machines A and B directly perform exchange, A may be used as a main control machine, A sends an action instruction to B, B replies whether the instruction is received, and then A and B simultaneously perform an action. After the processing is completed, A reports to the scheduling system, and then the scheduling system schedules A and B to return to original places. For example, when a large branch whose size is greater than a preset value is transferred, all the action instructions are a preset set of single small actions obtained by splitting the transferring, for example, lowering, grabbing, lifting, and transferring.

The "scheduling function" mentioned in the specification may be understood as a software program or function, which may be specifically implemented by a controller integrated with a communication module. For example, the scheduling function may be, for example, an instruction that may be used for instructing another autonomous robot or device to perform an action by communicating with the another autonomous robot or device. It should be noted that each autonomous robot may be a robot having a scheduling function, that is, a robot A may schedule a robot B, and the robot B may also schedule the robot A. To avoid scheduling confusion, a scheduling permission, a scheduling range, and a priority of a scheduling robot of the robot may be generally set (for example, a number is built-in a robot, and a priority of the robot may be determined by the number). However, "without a scheduling function" may be understood as that the scheduling function is disabled (for example, during human configuration, the scheduling function is configured as a symbol corresponding to disabled through a configuration symbol) or the scheduling function is not configured. This is not limited in this application.

The autonomous robot may encounter an abnormal condition during work. The abnormal condition may refer to an abnormal object, an abnormal environment, or the like.

In some embodiments of the present specification, the abnormal object may be an unexpected object, that is, the autonomous robot does not know the object in a working region in advance. For example, in an exemplary embodiment, the abnormal object may be a newly added obstacle that occurs in the working region after a walking path is planned (the object has not existed in the working region before the first autonomous robot plans the walking path). For another example, in another exemplary embodiment, the abnormal object may alternatively be an abnormal operation object (for example, an operation object that exceeds a conventional shape and size learned through machine learning by the first autonomous robot). The operation object is an object on which the autonomous robot performs an operation. For example, an intelligent lawn mower is used as an example, and grass and/or a shrub in a working region may be an operation object. If the intelligent lawn mower detects that there is a branch or a small tree grows in a lawn during mowing, the branch or the small tree may be considered an abnormal object. For another example, if the intelligent lawn mower detects an animal waste in the lawn during mowing, the animal waste may also be considered as an abnormal object.

In some embodiments of the present specification, the abnormal environment may be an unexpected external environment, that is, the autonomous robot does not know such a current external environment in advance. In some embodiments of the present specification, the autonomous robot may be configured with one or more environment sensing sensors (for example, a humidity sensor, a soil fertility sensor, and a rain and snow sensor). Therefore, the first autonomous robot may detect whether the external environment is abnormal by using the environment sensing sensor of the first autonomous robot during operation.

In an exemplary embodiment, an intelligent lawn mower is used as an example, and during mowing, the intelligent lawn mower may detect whether a lawn is lack of water by using a humidity sensor of the intelligent lawn mower (for example, detect that moisture content of soil of the lawn is lower than a preset value). If the lawn is lack of water, that the lawn is lack of water may be considered as a specific abnormal environment.

In another exemplary embodiment, an intelligent lawn mower is used as an example, and during mowing, the intelligent lawn mower may detect whether a lawn is lack of fertilizer by using a soil fertility sensor of the intelligent lawn mower (for example, detect that content of nitrogen, phosphorus, or potassium in soil of the lawn is lower than a corresponding preset value). If the lawn is lack of fertilizer, that the lawn is lack of fertilizer may be considered as a specific abnormal environment.

In another exemplary embodiment, an intelligent lawn mower is used as an example, and during mowing, the intelligent lawn mower may also detect whether there is precipitation locally by using a rain and snow sensor of the intelligent lawn mower, and if there is precipitation locally, that there is precipitation locally may also be considered as a specific abnormal environment.

It should be noted that when the method is performed, the first autonomous robot may search a pre-stored foreign object and policy correspondence table for a processing policy corresponding to an abnormal condition according to a type of the abnormal condition, and when the processing policy corresponding to the abnormal condition is an independent processing policy, the first autonomous robot executes a step of determining whether there is a second autonomous robot that can independently process the abnormal condition in the Internet of Things according to the status information. When the processing policy corresponding to the abnormal condition is a cooperative processing policy, the first autonomous robot executes a step of determining whether there is a third autonomous robot that can assist in processing the abnormal condition in the Internet of Things according to the status information. It may be understood that the first autonomous robot may be a robot having a scheduling function, or may be replaced with a scheduling system, and execution is performed by the scheduling system. For the first autonomous robot without the scheduling function, the first autonomous robot may determine a policy corresponding to a foreign object, or may only send information about a foreign object to a scheduling system or a scheduling robot (the scheduling robot having the scheduling function). In this case, the scheduling system or the scheduling robot adopts the independent processing policy or the cooperative processing policy to process the foreign object, to determine determination and scheduling of the second autonomous robot or the third robot.

For ease of description, in the following embodiments of the present specification, an abnormal object (or referred to as a foreign object for short) is mainly used as an example for description.

Referring to FIG. 2, an embodiment of the present specification provides a multi-machine cooperation method applied to an autonomous robot side. In some embodiments of the present specification, the multi-machine cooperation method may include the following steps.

S201: A first autonomous robot determines, when detecting an abnormal object during operation, whether the abnormal object can be independently processed.

In an optional embodiment, the first autonomous robot walks in a working region and performs a maintenance operation on a ground in the working region, where the maintenance operation may be, for example, mowing, fertilization, or sowing, and the maintenance operation is related to a working head of the first autonomous robot. If an abnormal object is detected during operation, for example, the abnormal object is an unexpected object existing in the working region and affecting the maintenance operation, in this case, the first autonomous robot determines whether the abnormal object can be independently processed. When determining whether the abnormal object can be independently processed, the first autonomous robot may first determine a working policy required to eliminate the abnormal condition and a work type that can be processed by the first autonomous robot, where the work type may be determined according to, for example, a working head carried by the first autonomous robot, for example, the working head is a mowing assembly, and the work type is mowing. For an object that is beyond a mowing function (for example, a small branch whose size is smaller than a preset size) identified by an identification component (for example, an image acquisition device or a radar) during operation, the object cannot be processed. The working policy may be, for example, an obstacle avoidance policy in which the abnormal object (for example, an obstacle such as a stone that has been stored in a robot) is bypassed or a head replacement processing policy in which processing is performed by replacing a working head (for example, a small branch may be processed by replacing a mowing working head with a pickup working head) or an assistance request policy. The assistance request policy includes, for example, an independent processing policy in which a foreign object can be independently removed or a cooperative processing policy in which a foreign object can be removed through cooperation. Specific conditions and policies may be predefined and stored in a machine or device. For example, a foreign object that can be independently processed may be determined by using a correspondence between a foreign object type and an independent processing policy, that is, a machine may pre-store a correspondence between a foreign object and the independent processing policy, to determine that the independent processing policy may be used for which foreign object. It may be understood that the independent processing policy may include a corresponding working head type that can independently process the foreign object, to determine which machine can process which foreign object. Similarly, a foreign object that needs to be cooperatively processed is determined by using a correspondence between a foreign object type and a cooperative processing policy, to adopt the corresponding cooperative processing policy, where the cooperative processing policy may include a working head type for cooperatively processing the corresponding foreign object. It should be noted that a correspondence between the related information (for example, the foreign object, a device for processing the foreign object, and the policy adopted by the foreign object) may be pre-established and stored in a memory of the first autonomous robot for calling and determining. It is determined, based on the working policy and the work type, whether the abnormal object can be independently processed. For example, in an embodiment, if the abnormal object is not an obstacle for obstacle avoidance and cannot be processed by replacing a working head, the first autonomous robot determines that the abnormal object cannot be independently processed, and then sends an assistance request to another device in an Internet of Things in which the first autonomous robot is located for assistance.

In an embodiment, the assistance request may include only a foreign object type and position information of a foreign object, for example, a position of the foreign object and a position of a machine when the abnormal object is found, so that the another device performs an active response according to the assistance request, to process the abnormal object. For example, the another device determines whether to perform processing and a processing route if determining to perform processing, sends confirmation information to the first autonomous robot after determining to perform processing to inform the first autonomous robot, and performs processing according to the generated processing route when receiving a consent signal of the first autonomous robot. Herein, sending the confirmation information and the consent signal is to ensure that a robot that performs processing meets a quantity of to-be-processed foreign objects, and avoid a waste of resources. It should be noted that in another embodiment, the another device may alternatively send confirmation information to the first autonomous robot before determining to perform processing, and then when receiving a consent signal fed back by the first autonomous robot within a preset time, generate a processing route based on the position of the foreign object and perform processing according to the processing route, to further process the abnormal object. Optionally, the processing route may alternatively be generated by the first autonomous robot and then sent to a specified device that performs processing, and the specified device that performs processing receives the processing route and comes here according to the processing route.

That is, the assistance request may include only information about the foreign object, for example, the foreign object type (a branch or dog shit) and the position of the foreign object, and the device receiving the assistance request may determine whether to perform processing. Certainly, in another embodiment, the assistance request may further include another information, for example, a working head required to eliminate the foreign object (for example, a working head that can grab a large branch) and processing policy information (for example, the obstacle avoidance policy, the head replacement processing policy, the cooperative processing policy, or the independent processing policy). This is not limited in this embodiment.

In another embodiment, the assistance request is only a broadcast signal and does not include any information about the foreign object such as the working head required to eliminate the foreign object and the position information of the foreign object, where the sent assistance request may be used for obtaining status information of the another device. For another example, when the assistance request is only used for broadcasting for assistance, status query information may be sent to the another device together with the assistance request or after the assistance request is sent, and a status of the another device may be queried to obtain the status information of the another device, to determine a device that can process the foreign object, and the device may be scheduled for processing by communicating with the device. The status query signal may include querying a work type or a task type that can be executed by the device, whether the device is currently idle, a time required for completing a current work if the device is not idle, whether there is another tobe-executed task (which may be determined by obtaining a task list thereof), and the like, and at least one type of information related to elimination of the foreign object, for example, a remaining power, to determine a schedulable robot according to the status information.

S202: When the abnormal object cannot be independently processed, the first autonomous robot sends an assistance request to another device in an Internet of Things in which the first autonomous robot is located.

When the abnormal object cannot be independently processed, for example, it is determined whether there is a second autonomous robot that can independently process the abnormal or whether there is a third autonomous robot that can assist in processing the abnormal in the Internet of things. When a determination result is yes, the first autonomous robot sends the assistance request to the second autonomous robot or the third autonomous robot in the Internet of things in which the first autonomous robot is located, and the second autonomous robot or the third autonomous robot reaches a specified position and processes the abnormal based on the assistance request.

In this embodiment of the present specification, when encountering an abnormal object that cannot be independently processed during operation, the first autonomous robot may send an assistance request to another device in an Internet of Things in which the first autonomous robot is located, to process the abnormal object, so that a multi-machine cooperation operation between autonomous robots or between an autonomous robot and another device is implemented, thereby improving operation performance of the autonomous robot.

In some embodiments of the present specification, the autonomous robot is generally configured with an obstacle detection sensor (for example, an ultrasonic sensor or a visual sensor) to detect whether there is an obstacle within a surrounding detectable range. Therefore, the first autonomous robot may detect an abnormal object by using an obstacle detection sensor of the first autonomous robot during operation. The operation is a work task executed by the first autonomous robot (for example, the operation task is executed according to a planned walking path). In some example embodiments, depending on different operation execution devices, the operation may be, for example, mowing, pruning, fertilization, pouring, disinsection, dust removal, or snow removal.

In some embodiments of the present specification, the determining whether the abnormal object can be independently processed may include:
if the first autonomous robot can process the abnormal object without replacing a working head or the first autonomous robot can independently process the abnormal object after replacing a working head, determining, by the first autonomous robot, that the abnormal object can be independently processed. Otherwise, the first autonomous robot determines that the abnormal object cannot be independently processed.

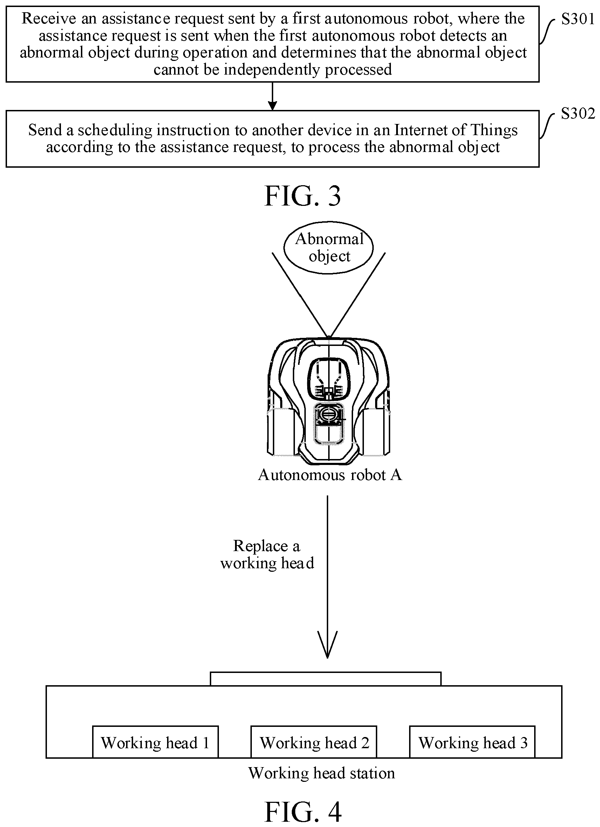

For example, in some embodiments of the present specification, although a working head currently carried by the first autonomous robot is not suitable for processing the abnormal object, if the first autonomous robot can also independently process the abnormal object after mounting a working head suitable for processing, it can be considered that the first autonomous robot can independently process the abnormal object. For example, in an exemplary embodiment shown in FIG. 4, although a working head currently carried by an autonomous robot A is not suitable for processing an abnormal object, the autonomous robot A can also independently process the abnormal object after moving to a working head station and mounting a suitable working head.

In another embodiment of the present specification, when detecting the abnormal object during operation, the first autonomous robot may further determine whether the abnormal object affects operation running of the first autonomous robot, to identify whether the abnormal object needs to be processed. When the abnormal object affects the operation running of the first autonomous robot, it indicates that the abnormal object needs to be processed. Therefore, the first autonomous robot may further determine whether the abnormal object can be independently processed.

For example, in another embodiment of the present specification, the determining, by the first autonomous robot when detecting an abnormal condition during operation, whether the abnormal condition can be independently processed includes:
monitoring, by the first autonomous robot, an ambient environment during the operation;
if detecting the abnormal condition in the ambient environment, acquiring, by the first autonomous robot, information about the abnormal condition, and determining, based on the information about the abnormal condition, whether the abnormal condition affects normal running of the first autonomous robot, to determine whether the abnormal condition needs to be processed; and
if the abnormal condition needs to be processed, performing, by the first autonomous robot, the step of determining a working policy required to eliminate the abnormal condition and determining, based on the working policy and a work type that can be processed by the first autonomous robot, whether the abnormal condition can be independently processed.

The ambient environment refers to an environment within a detectable range of a sensor. It is assumed that a sensor can detect a range of 120 degrees ahead and a detection distance is 6 m, the surrounding environment is a front environment that can be detected by the sensor.

The abnormal object is used as an example, and logic of determining whether the abnormal condition needs to be processed is as follows.

During running, a machine runs according to a preset path. When observing an abnormal object, the sensor may obtain data such as an angle, a height, or a size of the abnormal object relative to the sensor (data obtained by different sensors is different), and determine, according to the data, whether the abnormal object is on a running route of the machine, whether the size causes the machine to run abnormally, whether the abnormal object disappears within a specific time, and the like. If the abnormal object is not on the running path, and does not affect normal walking of the machine when the machine moves to the vicinity of the abnormal object, such an object does not need to be processed or not need to be processed temporarily.

For example, when detecting an abnormal object, an obstacle detection sensor of an autonomous robot may obtain data such as a position, a size (for example, a length, a width, a height), and a shape of the abnormal object relative to the autonomous robot. According to the data, a control device of the autonomous robot may determine whether the abnormal object is located on a walking route of the autonomous robot, whether the size causes the machine to run abnormally, whether the abnormal object disappears actively when the autonomous robot approaches (for example, an animal temporarily enters a working region), and the like. If the abnormal object is not on the running path, the size does not cause the machine to run abnormally, and the abnormal object disappears actively when the autonomous robot approaches the abnormal object (for example, it can be seen from a shape of the abnormal object that it is a cat, and the autonomous robot may predict that the cat generally gets out of the way when the autonomous robot approaches the cat), so that normal walking of the machine is not affected. In this way, it may be considered that the abnormal object does not affect the operation running of the first autonomous robot and does not need to be processed temporarily. On the contrary, it may be considered that the abnormal object affects the operation running of the first autonomous robot and needs to be processed.

In some embodiments of the present specification, the first autonomous robot may be an autonomous robot having a scheduling function (that is, the first autonomous robot is a scheduling device). In this case, the sending, by the first autonomous robot, an assistance request to another device in an Internet of Things in which the first autonomous robot is located may include:
when there is a second autonomous robot that can independently process the abnormal object in the Internet of Things, scheduling, by the first autonomous robot, the second autonomous robot to reach a specified position, so that the second autonomous robot processes the abnormal object. For example, the specified position may be a position of the abnormal object, or certainly the specified position may be a position of the first autonomous robot or a specific position near the first autonomous robot, which may be specifically set as required. After the first autonomous robot identifies the specified position to which the second robot needs to be scheduled, the first robot bypasses or avoids the specified position during walking. Optionally, the first robot marks the specified position to which the second machine needs to be scheduled on a map on which the first robot performs a work, and the scheduled second robot may complete an abnormal object processing task according to different machine types in a manner of fully covering or surrounding or partially surrounding the specified position after reaching the specified position. After completing the task, the second robot may send a notification message to the first robot through a server or directly, and the first robot modifies a task completion status of the specified position according to the received notification message.

For example, in some embodiments of the present specification, the first autonomous robot receives status information of the another device, and determines, according to the status information, whether there is a second autonomous robot that can independently process the abnormal condition in the Internet of Things; and when there is the second autonomous robot that can independently process the abnormal condition in the Internet of Things, the first autonomous robot sends a scheduling instruction to the second autonomous robot, where the scheduling instruction includes a scheduling path for the second autonomous robot to reach a specified position, so that the second autonomous robot reaches the specified position according to the scheduling instruction to process the abnormal condition. That is, the first autonomous robot may first find a second autonomous robot that can independently process the abnormal object, then generate a scheduling path according to a position of the second autonomous robot and the specified position, and send the scheduling path to the second autonomous robot, so that the second autonomous robot may reach the specified position according to the scheduling path. Certainly, in another embodiment of the present specification, after finding a second autonomous robot that can independently process the abnormal object, the first autonomous robot may alternatively send only the specified position to the second autonomous robot. In this case, the second autonomous robot may autonomously plan a path according to a position of the second autonomous robot and the specified position, and reach the specified position according to the path.

In some embodiments of the present specification, the second autonomous robot can directly process the abnormal object after reaching the specified position. In some other embodiments of the present specification, after reaching the specified position, and when receiving a processing instruction sent by the first autonomous robot, the second autonomous robot starts processing the abnormal object.

In some embodiments of the present specification, that the second autonomous robot processes the abnormal object may be that, for example, the second autonomous robot clears the abnormal object from the working region.

For example, in an exemplary embodiment of the present specification, when the abnormal object is an animal waste, the second autonomous robot, as an animal waste cleaning robot, may move to the vicinity of a position of the animal waste and clean the animal waste.

For example, in another exemplary embodiment of the present specification, an intelligent lawn mower is used as an example, and when an abnormal environment is that soil of a lawn is lack of water, that the second autonomous robot processes the abnormal environment may be that the second autonomous robot, as a pouring robot, performs an irrigation operation on the lawn.

For example, in another exemplary embodiment of the present specification, an intelligent lawn mower is used as an example, and when an abnormal environment is that soil of a lawn is lack of fertilizer, that the second autonomous robot processes the abnormal environment may be that the second autonomous robot, as a fertilization robot, performs a fertilization operation on the lawn.

For example, in another exemplary embodiment of the present specification, when the abnormal environment is that there is currently precipitation locally, the first autonomous robot may notify the second autonomous robot as the irrigation robot to stop executing the irrigation operation, and re-plan the irrigation operation.

For example, in another exemplary embodiment of the present specification, when the abnormal environment is that there is currently precipitation locally, the first autonomous robot may notify a window open/close controller (the window open/close controller is used as the second autonomous robot) located inside a home to perform a window closing operation.

For example, in another exemplary embodiment of the present specification, when the abnormal environment is that air quality exceeds a standard, the first autonomous robot may notify an air purifier (the window open/close controller is also used as the second autonomous robot) located inside the home to perform an air purification operation while notifying the window open/close controller (the window open/close controller is used as the second autonomous robot) located inside the home to perform the window closing operation, and the like.

In an embodiment of the present specification, the first autonomous robot may schedule the second autonomous robot that can independently process the abnormal object in a point-to-point wireless communication manner. For example, in an exemplary embodiment, the first autonomous robot may wirelessly communicate with the second autonomous robot through a vehicle-to-vehicle (V2V) communication protocol.

In some embodiments of the present specification, the first autonomous robot may send an assistance request for obtaining the status information of the another device to the another device, and determine the second autonomous robot according to the status information fed back by the another device based on the status query request. After receiving the assistance request, the another device may detect the status information of the another device and return the status information to the first autonomous robot. The status query request may be sent at regular time within a specified duration. For example, a query request is sent every five seconds within one minute. Certainly, a manner of obtaining the status information is not limited in the present specification. In another embodiment, the another device in the Internet of Things may actively report the status information of the another device to the first autonomous robot having the scheduling function at regular time.

In a possible implementation, the status information may refer to all parameters of the device, including a device parameter and status information.

In an embodiment of the present specification, to reduce transmission traffic and an amount of information viewed by the first robot for the first autonomous robot to find required information as soon as possible, preferably, the status information mainly includes information related to foreign object processing, for example, a task/a function that can be executed by the device (for example, mowing or irrigation), a position of the device, a device idle status (for example, a schedule), whether there is an identification component (for example, a camera or a radio frequency transmitter) that can identify a working head identifier (for example, an image or a barcode), a remaining power, and a task completion status.

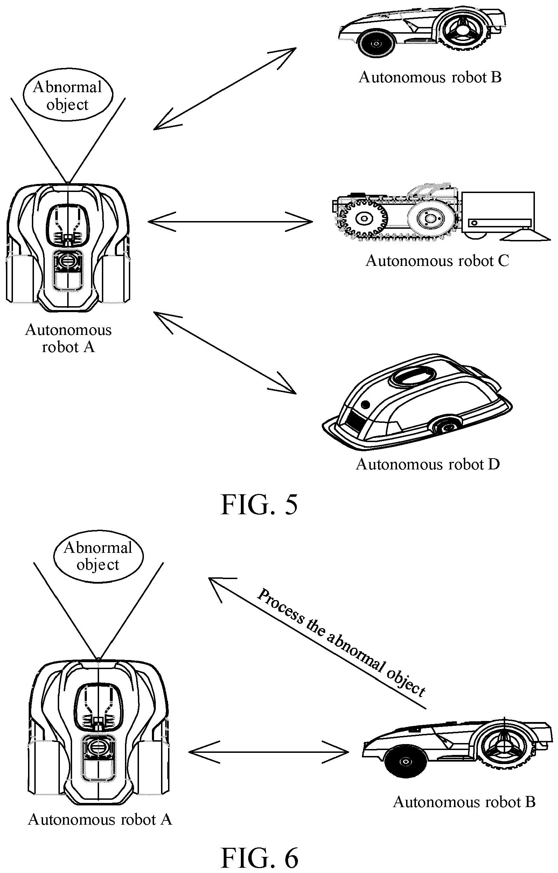

For example, in an exemplary embodiment shown in FIG. 5, based on a V2V communication protocol, an autonomous robot A may send, in a form of broadcast, multicast, or the like, a status query request to an autonomous robot B, an autonomous robot C, and an autonomous robot D in an Internet of Things in which the autonomous robot A is located. Therefore, after status information fed back by the autonomous robot B, the autonomous robot C, and the autonomous robot D is received, the second autonomous robot is determined based on the feedback status information.

In an embodiment of the present specification, the determining a second autonomous robot according to the status information may include: (1) determining, according to the status information, an autonomous robot that meets an assistance condition in the another device.

For example, the first autonomous robot determines, according to the status information, whether there is an autonomous robot of which an executable work type matches a work type for eliminating the abnormal condition or a functional component matches a functional component for eliminating the abnormal condition in the another device, and if a result is yes, determines that the autonomous robot meets an assistance condition.

It should be understood that the assistance condition may include that, for example, an executed task/function/work type matches foreign object processing or a functional component (for example, a working head) matches foreign object processing, and may further include another auxiliary condition, for example, a remaining power is greater than a preset threshold, a work task is least, or a priority of a work task is lowest. This is not limited in this embodiment.

It should be noted that a foreign object and a functional component required for processing the foreign object or a device that can perform a specific task are correspondingly pre-stored in a memory of the first autonomous robot. The foreign object may be a set of common objects that may be encountered by each robot or device during operation but that cannot be processed by each robot or device. Certainly, according to functions of all robots or devices in the Internet of Things, all objects that can be processed by the robots or devices may alternatively be classified and correspond to the devices that can process the corresponding objects, a correspondence table is generated, and then is stored in a device having a scheduling function. Certainly, in another embodiment, the correspondence table may alternatively be stored in each robot or device, so that each robot or device can timely send an assistance request after finding that a foreign object that can be processed by another device in the Internet of Things but cannot be processed by the robot or device occurs during work, thereby implementing multi-machine cooperation.

Similarly, a task priority may also be preset and stored in a device having a scheduling function or in each device in the Internet of Things, to determine an urgency degree of a task, and the task priority may be used as a factor for determining whether the assistance condition is met; and may also be used for determining whether a working head needs to be mounted again after the working head is switched when a robot is scheduled to switch the working head as follows. For example, when the second autonomous robot is scheduled, when processing of a foreign object is urgent, that is, when a priority of processing of the foreign object is higher than a priority of a work executed by the second autonomous robot, the second autonomous robot first stops the currently executed work, moves to a working head station to replace a working head, moves to a specified position to process the foreign object, and then returns to the working head station to mount the previous working head, to continue executing the interrupted work. When processing of a foreign object is not urgent, and a priority of processing of the foreign object is less than or equal to a priority of a work executed by the second autonomous robot, the second autonomous robot first executes the currently executed work, then moves to the working head station to replace a working head, and moves to a specified position to process the foreign object, and after processing the foreign object, the second autonomous robot does not need to mount the previous working head.

For example, when the assistance condition includes only a condition that a foreign object matches a corresponding function or device, the first autonomous robot determines, according to status information fed back by the device, that the device meets the assistance condition, where if the information fed back by the device is consistent with a functional component required for foreign object processing, for example, the foreign object is a branch, the first autonomous robot finds a robot whose working head is a pickup working head from the feedback status information.

(2) If only one autonomous robot meets the assistance condition, the autonomous robot meeting the assistance condition is determined as the second autonomous robot. For example, in an exemplary embodiment shown in FIG. 6, based on an assistance request of an autonomous robot A, an autonomous robot B that can independently process the abnormal object can independently process the abnormal object.

(3) If a plurality of autonomous robots meet the assistance condition, according to a first screening rule, one autonomous robot is selected from the plurality of autonomous robots meeting the assistance condition as the second autonomous robot. In an embodiment of the present specification, the autonomous robot meeting the scheduling condition may mean that the autonomous robot is provided with a working head that can process the abnormal object. For example, in an exemplary embodiment, an intelligent lawn mower detects that a lawn is lack of fertilizer during mowing, and there is a fertilization robot in autonomous robots providing status information. A person skilled in the art may understand that this is merely an exemplary description and should not be construed as uniquely limiting the present specification. In another embodiment of the present specification, the assistance condition may be set according to an actual condition.

In an embodiment of the present specification, the first screening rule may be that random selection is performed, a robot closest to the first autonomous robot is first, a robot having a maximum remaining power is first, a robot having fewest remaining unfinished tasks is first and/or a robot with a lowest task priority is first, or the like, and may be selected according to an actual requirement.

In some other embodiments of the present specification, the sending, by the first autonomous robot, an assistance request to another device in an Internet of Things in which the first autonomous robot is located may further include: when there is no second autonomous robot that can independently process the abnormal object in the Internet of Things, selecting, by the first autonomous robot, one autonomous robot from the another device, and controlling the autonomous robot to mount a working head that can independently process the abnormal object; or when there is no second autonomous robot that can independently process the abnormal object in the Internet of Things, mounting, by the first autonomous robot, a working head that can independently process the abnormal object.

In an implementation, when there is no second autonomous robot that can independently process the abnormal condition in the Internet of Things, the first autonomous robot calls pre-stored position information of a working head station and a working head list of the working head station, where the working head station has a plurality of working head placement positions, at least one working head is pre-placed at each placement position, a working head identifier is set at each working head placement position or a working head identifier is set on each working head, and the working head identifier includes a working head type or work type information that can be executed by a working head; and when there is a working head that can eliminate the abnormal condition in the working head list, the first autonomous robot selects, according to the feedback status information, an autonomous robot that can identify a working head identifier from the another device, and sends a replacement instruction to the autonomous robot, where the replacement instruction includes a return path for the autonomous robot to move to the working head station and the working head identifier of the working head that can eliminate the abnormal condition, so that the autonomous robot mounts, according to the replacement instruction, the working head that can eliminate the abnormal condition.

The working head is preset in the working head station, and a work that can be processed by each working head may be stored as a work identifier (for example, a barcode), and an identification member for identifying the work identifier is preset on a corresponding robot at a corresponding position of the working head station. For details, reference may be made to a prior art (for example, the patent disclosed by CN1927553A), which is not limited to this application.

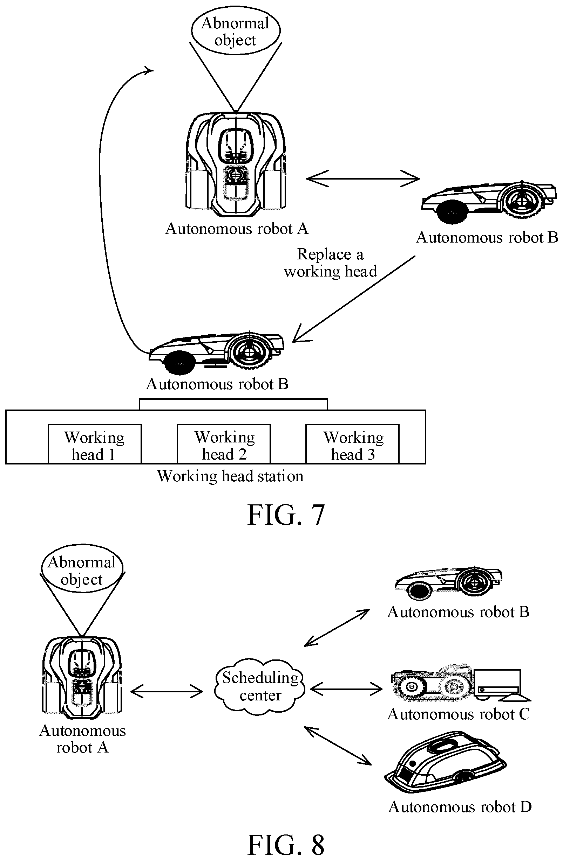

For example, in an exemplary embodiment shown in FIG. 7, an autonomous robot A selects one autonomous robot B from another autonomous robot and instructs the autonomous robot B to move to a work station and mount a working head adapted to the abnormal object or an abnormal scene as a second autonomous robot.

In an embodiment of the present specification, the second screening rule may be that random selection is performed, a robot closest to the work station is first, a robot having a maximum remaining power is first, a robot having fewest remaining unfinished tasks is first and/or a robot with a lowest task priority is first, or the like, and may also be selected according to an actual requirement.

At the work station, a position of each working head in the work station may be fixed, so that the autonomous robot can automatically plan a path from a current position to a required working head. The working head may be connected to the autonomous robot through a connector facilitating connection or disconnection. In an embodiment of the present specification, the connector may be formed by two components, one component may be mounted on the autonomous robot, the other component may be mounted on the working head, and the two components may be connected by a structure such as a shaft hole structure or a sliding groove structure. In another embodiment of the present specification, a fastener may be disposed on one component, and the fastener may move between a disassembly position and an assembly position to control connection or disconnection of the two components. When disassembly is required, the fastener moves to the disassembly position, the autonomous robot retracts, the two component are disconnected. When assembly is required, one component is inserted into the other component, and the fastener moves to the assembly position, to ensure that the two components cannot be disconnected. Therefore, when there is no second autonomous robot that can independently process the abnormal object in the Internet of Things, the first autonomous robot may select one autonomous robot from the another device in the Internet of Things, and control the autonomous robot to move to the work station and mount a working head that can independently process the abnormal object for processing the abnormal object.

In an embodiment of the present specification, after determining the second autonomous robot according to the status information and scheduling the second autonomous robot to process the abnormal object, the first autonomous robot may bypass the abnormal object in an obstacle avoidance manner and continue executing the operation task. The second autonomous robot may further feed back a processed signal to the first autonomous robot after processing the abnormal object (for example, completing all action instructions of the abnormal object), so that the first autonomous robot returns to the position at an appropriate moment to continue executing the operation task. In addition, when the first autonomous robot receives the processed signal sent by the second autonomous robot, the first autonomous robot may control the second autonomous robot to return to a position before processing the abnormal object to continue executing an interrupted operation of the second autonomous robot.

In an embodiment of the present specification, the method further includes: after sending the scheduling instruction to the second autonomous robot, leaving, by the first autonomous robot, a target position at which the abnormal object is detected and continuing executing the operation.

Specifically, when a waiting time after the first autonomous robot sends the scheduling instruction to the second autonomous robot reaches a preset waiting time, or when the first autonomous robot receives a reply signal fed back by the second autonomous robot, the first autonomous robot leaves a target position at which the abnormal condition is detected and continues executing the operation.

In an embodiment of the present specification, for an abnormal object, the continuing executing the operation may be, for example, bypassing the abnormal object and continuing the operation. For an abnormal environment (for example, raining), the continuing executing the operation may be, for example, directly continuing work or returning. After sending the scheduling instruction to the second autonomous robot may mean that when the scheduling instruction is sent, when the second autonomous robot moves to the specified position according to the scheduling instruction, when the second autonomous robot reaches the specified position according to the scheduling instruction, or the like.

In another embodiment of the present specification, the method may further include: when the first autonomous robot receives the processed signal sent by the second autonomous robot, returning, by the first autonomous robot, to the target position at a specified moment, and performing the operation on the target position or a region within a preset range of the target position.

For example, the first autonomous robot returns to the target position (that is, a position at which the abnormal object is found) at a specified moment, and performs the operation on the target position or a region within a preset range of the position of the abnormal object. The specified moment may be, for example, within a set time interval in which the processed signal is received, or completing a work near the position at which the processed signal is received, or the like.

Similarly, if the first autonomous robot can process the abnormal object, the first autonomous robot can also continue executing the previously interrupted work task after processing is completed. In addition, if the first autonomous robot processes the abnormal object after replacing a working head, after the processing is completed, the first autonomous robot may first mount the original working head and then continue executing the previously interrupted work task.

In some embodiments of the present specification, in some cases, if an abnormal object exceeds a preset threshold due to a relatively large size, a relatively large weight, and/or a relatively large volume, any device in the Internet of Things is also difficult to independently process the abnormal object even if being provided with or replaced with an adapted working head. In this case, the first autonomous robot may control two or more devices in the Internet of Things to cooperatively process the abnormal object. That is, when there is a third autonomous robot that can assist in processing the abnormal object in the Internet of Things, the first autonomous robot schedules the third autonomous robot to reach a specified position, so that the first autonomous robot processes the abnormal object in cooperation with the third autonomous robot. Certainly, when there is no third autonomous robot that can assist in processing the abnormal object in the Internet of Things, the first autonomous robot may select one or more autonomous robots from the another device (which may be selected according to an actual requirement), and control the autonomous robot to mount a working head that can assist in processing the abnormal object as the third autonomous robot that can assist in processing the abnormal object.

In an embodiment of the present specification, the first autonomous robot is an autonomous robot having a scheduling function, and the sending, by the first autonomous robot, an assistance request to another device in an Internet of Things in which the first autonomous robot is located includes: receiving, by the first autonomous robot, status information of the another device, and determining, according to the status information, whether there is a third autonomous robot that can assist in processing the abnormal condition in the Internet of Things; and when there is the third autonomous robot that can assist in processing the abnormal condition in the Internet of Things, sending, by the first autonomous robot, a scheduling instruction to the third autonomous robot, where the scheduling instruction includes a scheduling path for the third autonomous robot to reach a specified position, so that the third autonomous robot reaches the specified position according to the scheduling instruction, and the first autonomous robot processes the abnormal condition in cooperation with the third autonomous robot.

In an embodiment of the present specification, when there is no third autonomous robot that can assist in processing the abnormal condition in the Internet of Things, the first autonomous robot calls pre-stored position information of a working head station and a working head list of the working head station, where the working head station has a plurality of working head placement positions, at least one working head is pre-placed at each placement position, a working head identifier is set at each working head placement position or a working head identifier is set on each working head, and the working head identifier includes a working head type or work type information that can be executed by a working head; and when there is a working head that can assist in processing the abnormal condition in the working head list, the first autonomous robot selects, according to the feedback status information, an autonomous robot that can identify a working head identifier from the another device, and sends a replacement instruction to the autonomous robot, where the replacement instruction includes a return path for the autonomous robot to move to the working head station and the working head identifier of the working head that can assist in processing the abnormal condition, so that the autonomous robot moves, according to the replacement instruction, to the working head station and mounts the working head that can assist in processing the abnormal condition.

It should be noted that cooperative processing logic of the third robot is similar to the independent processing logic of the second autonomous robot, for example, a foreign object requiring cooperative processing and a processing device corresponding to the foreign object may be pre-stored in a scheduling device having a scheduling function or each device, to be read and used when a request is sent and the third robot for cooperative processing is determined after encountering during work. A part that is not described may further refer to the above and is compared with the independent processing logic of the second autonomous robot. Details are not described herein again.

It should be noted that when the third robot assists in processing, the first autonomous robot may further determine a quantity of autonomous robots required for processing the abnormal object (for example, the first autonomous robot may estimate a quantity of required autonomous robots according to a shape, a size, or the like of the abnormal object). If the quantity of required autonomous robots is less than or equal to a quantity of third autonomous robots, a plurality of third autonomous robots perform processing or second autonomous robots whose quantity is a quantity of required robots are selected from the plurality of third autonomous robots for processing. If the quantity of required robots is greater than the quantity of third autonomous robots, the first autonomous robot determines whether a working head of the first autonomous robot can assist in processing. If the first autonomous robot can assist in processing, and a quantity of first autonomous robot plus the quantity of third autonomous robots is equal to the quantity of required robots, the first autonomous robot performs processing together with the plurality of third autonomous robots. Otherwise, some other robots may be called to mount working heads to meet the quantity of required robots assisting in processing. For a calling rule, reference may be made to the first screening rule and/or the second screening rule, and details are not described herein again.

In an embodiment of the present specification, the processing the abnormal object in cooperation with the third autonomous robot includes: sending, by the first autonomous robot, an action instruction to the third autonomous robot; and when receiving receiving confirmation information returned by the third autonomous robot for the action instruction, synchronously performing, by the first autonomous robot and the third autonomous robot, an action according to the action instruction, so that the first autonomous robot and the third autonomous robot cooperatively process the abnormal object.

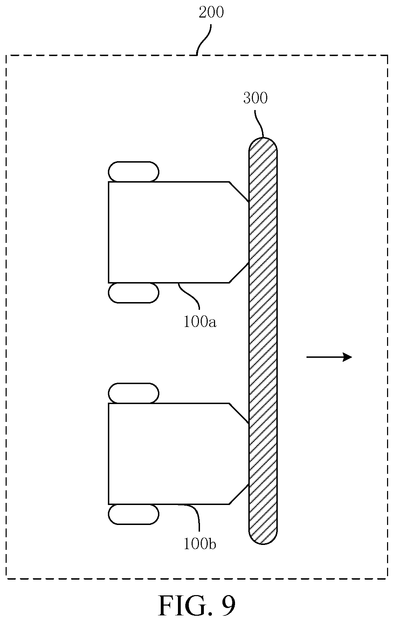

For example, in an exemplary embodiment shown in FIG. 9, when performing an operation in a working region 200, a first autonomous robot 101a detects an abnormal object 300 that cannot be independently processed. The first autonomous robot 101a schedules a third autonomous robot 101b to assist. After the third autonomous robot 101b reaches a specified position, the first autonomous robot 101a may send an action instruction to the third autonomous robot 101b. The third autonomous robot 101b may reply receiving confirmation information after receiving the action instruction. When receiving the receiving confirmation information returned by the third autonomous robot 101b for the action instruction, the first autonomous robot 101a may synchronously perform an action with the third autonomous robot 101b according to the action instruction, so that the first autonomous robot and the third autonomous robot cooperatively process the abnormal object, that is, the first autonomous robot 101a and the third autonomous robot 101b synchronously push the abnormal object 300 to the outside of the working region 200, and finally push the abnormal object 300 to the outside of the working region 200, to complete multi-machine cooperation between the first autonomous robot 101a and the third autonomous robot 101b.

In some other embodiments of the present specification, the first autonomous robot may alternatively be an autonomous robot that does not have a scheduling function. In this case, the sending, by the first autonomous robot, an assistance request to another device in an Internet of Things in which the first autonomous robot is located may include: sending, by the first autonomous robot, the assistance request to an autonomous robot having the scheduling function or a scheduling system, so that the autonomous robot having the scheduling function or the scheduling system schedules, according to the assistance request, a second autonomous robot that can independently process the abnormal object, so that a multi-machine cooperation operation between autonomous robots is implemented by using a scheduling device.

For example, in an exemplary embodiment shown in FIG. 8, when the abnormal object cannot be independently processed, the autonomous robot A sends an assistance request to a scheduling system, so that the scheduling system determines a second autonomous robot from the autonomous robot B, an autonomous robot C, and an autonomous robot D according to the assistance request.

In some other embodiments of the present specification, under the premise that the first autonomous robot is the autonomous robot that does not have the scheduling function, if an abnormal object has a relatively large size, a relatively large weight, and/or a relatively large volume, any device in the Internet of Things is also difficult to independently process the abnormal object even if being configured with or replaced with an adapted working head. In this case, the sending, by the first autonomous robot, an assistance request to another device in an Internet of Things in which the first autonomous robot is located may include: sending, by the first autonomous robot, the assistance request to an autonomous robot having the scheduling function or a scheduling system, so that the autonomous robot having the scheduling function or the scheduling system schedules, according to the assistance request, a third autonomous robot that can assist in processing the abnormal object.

Specifically, the first autonomous robot sends the assistance request to the autonomous robot having the scheduling function or the scheduling system, so that the autonomous robot having the scheduling function or the scheduling system determines a processing policy corresponding to the abnormal condition according to the assistance request, and when the processing policy is an independent processing policy, schedules, according to the independent processing policy, a second autonomous robot that can independently process the abnormal condition; and when the processing policy is a cooperative processing policy, schedules, according to the cooperative processing policy, a third autonomous robot that can assist in processing the abnormal condition.

In some embodiments of the present specification, during cooperative processing, the first autonomous robot may stay at the position at which the abnormal object is detected during scheduling of the autonomous robot to wait for the arrival of the third autonomous robot, so that when the quantity of third autonomous robots is insufficient, the first autonomous robot can process the abnormal object together with the third autonomous robot that can assist in working.

Referring to FIG. 3, an embodiment of the present specification provides a multi-machine cooperation method applied to a scheduling device side. In this case, an autonomous robot having a scheduling function in an Internet of Things or a scheduling system may be used as a scheduling device. In some embodiments of the present specification, the multi-machine cooperation method may include the following steps.

S301: Receive an assistance request sent by a first autonomous robot, where the assistance request is sent when the first autonomous robot detects an abnormal object or an abnormal environment during operation, and determines that the abnormal object cannot be independently processed.

S302: Send a scheduling instruction to another device in an Internet of Things according to the assistance request, to process the abnormal object.

In the embodiment shown in FIG. 3, when the first autonomous robot is an autonomous robot that does not have a scheduling function, and the sending a scheduling instruction to another device in an Internet of Things according to the assistance request may include:
when there is a second autonomous robot that can independently process the abnormal object in the Internet of Things, scheduling the second autonomous robot to reach a specified position, so that the second autonomous robot processes the abnormal object; and when there is no second autonomous robot that can independently process the abnormal object in the Internet of Things, selecting one autonomous robot from the another device, and controlling the autonomous robot to mount a working head that can independently process the abnormal object; or controlling the first autonomous robot to mount a working head that can independently process the abnormal object.

In the embodiment shown in FIG. 3, when the first autonomous robot is the autonomous robot that does not have the scheduling function, if an abnormal object has a relatively large size, a relatively large weight, and/or a relatively large volume, any device in the Internet of Things is also difficult to independently process the abnormal object even if being configured with or replaced with an adapted working head. The sending a scheduling instruction to another device in an Internet of Things according to the assistance request may include:
when there is a third autonomous robot that can assist in processing the abnormal object in the Internet of Things, scheduling the third autonomous robot to reach a specified position, so that the third autonomous robot and the first autonomous robot cooperatively process the abnormal object; or when there is no third autonomous robot that can assist in processing the abnormal object in the Internet of Things, selecting one autonomous robot from the another device, and controlling the autonomous robot to mount a working head that can assist in processing the abnormal object as the third autonomous robot.

In the embodiment shown in FIG. 3, in the cooperative processing process, the scheduling device may further control synchronous action of the first autonomous robot and the third autonomous robot; or select one of the first autonomous robot and the third autonomous robot as a main control robot, and the main control robot controls synchronous action of the first autonomous robot and the third autonomous robot.

In the embodiment shown in FIG. 3, after the third autonomous robot and the first autonomous robot cooperatively process the abnormal object, the scheduling device may control the first autonomous robot and the third autonomous robot to return to respective positions before processing the abnormal object, so that the first autonomous robot and the third autonomous robot respectively execute respective interrupted operations.

In an embodiment of the present invention, the scheduling device may alternatively communicate with an autonomous robot in a wireless communication manner. In an embodiment of the present specification, processing logic for the scheduling device to select one autonomous robot from the another device in the Internet of Things may refer to the description of the foregoing related part, and details are not described herein again.

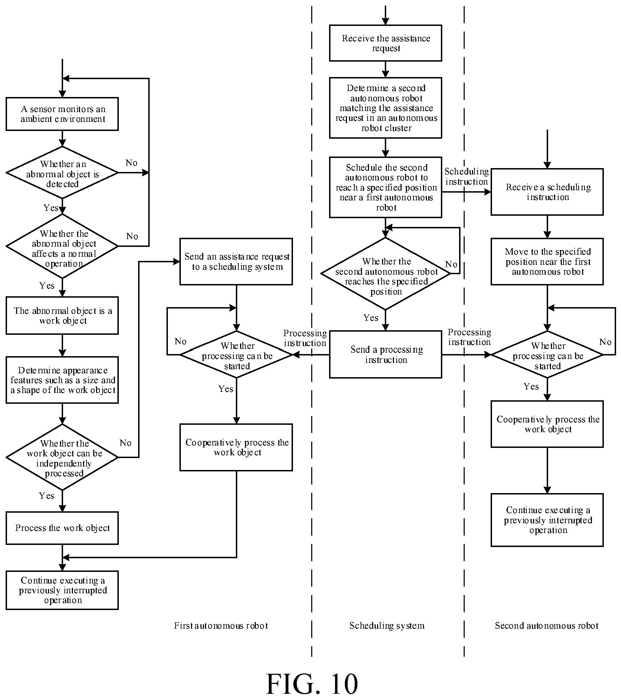

The multi-machine cooperation method is described from a single side. For ease of understanding, an interaction process among a first autonomous robot, a second autonomous robot, and a scheduling system is shown in an embodiment shown in FIG. 10. It can be learned from FIG. 10 that when processing an abnormal object, the first autonomous robot may further cooperatively work with the second autonomous robot. When completing processing of a work object (that is, the abnormal object that needs to be processed), the first autonomous robot and the second autonomous robot may return to respective positions at which the operations are interrupted previously and continue executing the operations.

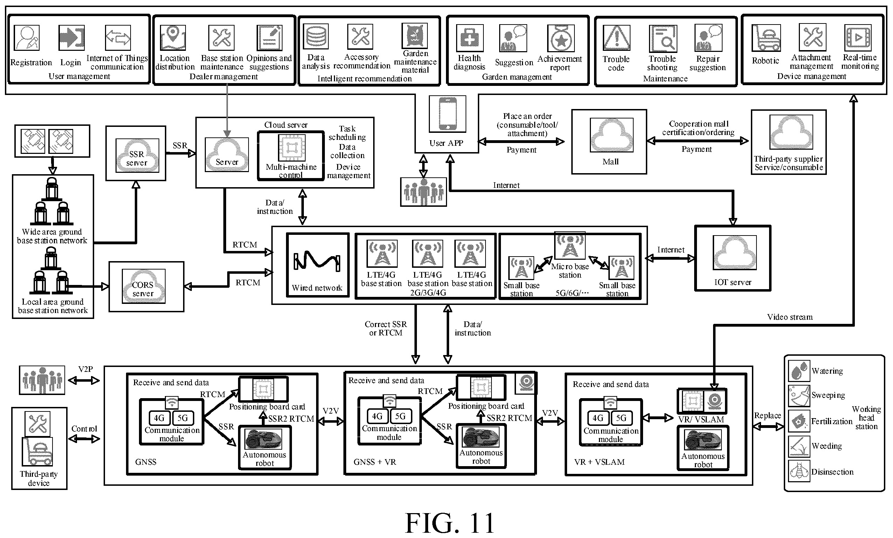

Referring to FIG. 11, the present specification further provides an around house intelligent system, which may include the autonomous robots, a positioning server, an Internet of Things (IoT) server, a scheduling system (that is, a cloud server in FIG. 11), a client (a user APP), a working head station, and the like.

With reference to FIG. 11, in an embodiment of the present specification, the autonomous robot may further control a third-party device. For example, the autonomous robot may control on and off of a window open/close controller, an air purifier, and the like.

With reference to FIG. 11, in an embodiment of the present specification, the autonomous robot may be provided with a visual sensor. Correspondingly, the multi-machine cooperation method may further include: when receiving a target region monitoring instruction sent by the client, performing, by the first autonomous robot, visual monitoring on a target region by using the visual sensor mounted on the first autonomous robot, and providing a monitoring video stream to the client for viewing. The target region may be, for example, a home indoor and outdoor environment. Therefore, it is convenient for a user to remotely operate the autonomous robot through the client to implement real-time monitoring of the home indoor and outdoor environment.

With reference to FIG. 11, in an embodiment of the present specification, a positioning module of the autonomous robot may perform high-precision positioning based on a high-precision service provided by the positioning server (for example, an SSR server or a CORS server in FIG. 11). For example, a high-precision positioning system may be a differential positioning real-time kinematic (RTK) technology, space state representation (SSR) or radio technical commission for maritime services (RTCM) positioning, continuously operating reference station (CORS) positioning, or the like. Further, when positioning modules of two autonomous robots are different, to implement cooperation, the first autonomous robot may perform format conversion on positioning data.

With reference to FIG. 11, in an embodiment of the present specification, the autonomous robot may construct a working region map based on a global navigation satellite system (GNSS). In another embodiment of the present specification, the autonomous robot may alternatively construct a working region map based on a GNSS and virtual recognition (VR). In still another embodiment of the present specification, the autonomous robot may alternatively construct a working region map based on VR and visual simultaneous localization and mapping (VSLAM).

With reference to FIG. 11, in an embodiment of the present specification, the scheduling system may obtain data acquired by a sensor of the autonomous robot, and perform big data analysis on the data to provide an intelligent suggestion for the user. In an embodiment of that present specification, the intelligent suggestion may be, for example, garden diagnostic maintenance, and a consumables purchase suggestion (in contact with a private mall and a third-party cooperative mall for automatic purchase).

With reference to FIG. 11, in an embodiment of the present specification, the scheduling system can be used to facilitate unified management of the entire autonomous robot cluster, for example, information such as positions and working dynamics of all autonomous robots in the autonomous robot cluster can be grasped in real time. When it is found that routes of the autonomous robots overlap or cross, a sequence of the autonomous robots can be planned to avoid collision or mutual waiting. Specifically, when maps of the first autonomous robot and the second autonomous robot overlap, the server may respectively schedule the two robots according to different schedules to avoid the two robots colliding in an overlapping region of the maps; or when detecting that the first autonomous robot enters an overlapping region, the server sends status information that the first autonomous robot has entered the overlapping region to the second autonomous robot, so that when the first autonomous robot works in the overlapping region, the second autonomous robot may first execute a work in another region or wait for the first autonomous robot to complete the work. Similarly, collision or mutual waiting between the two robots can be avoided.

With reference to FIG. 11, in an embodiment of the present specification, the client may communicate with the Internet of Things server through an Internet, and the Internet of Things server may communicate with an autonomous robot base station or a commercial mobile communication base station (for example, a 2G, 3G, 4G and/or 5G base station) through the Internet, while the autonomous robot base station or the commercial mobile communication base station may wirelessly communicate with the autonomous robot, so that the client can communicate with the autonomous robot.

With reference to FIG. 11, in an embodiment of the present specification, the around house intelligent system also provides various management services, for example, user management (for example, user registration, login, and physical network communication), dealer management (for example, location distribution, base station maintenance, and opinions and suggestions), intelligent recommendation (for example, data analysis, configuration recommendation, and garden maintenance materials), garden management (health diagnosis, advice, and achievement report), maintenance (fault code, troubleshooting, and maintenance advice), and device management (Robotic, working head station management, and real-time monitoring).

Although the processes described above include a plurality of operations that appear in a particular sequence, it should be clearly understood that these processes may include more or fewer operations which can be performed in sequence or in a parallel manner (for example, by using a parallel processor or in a multithread environment).

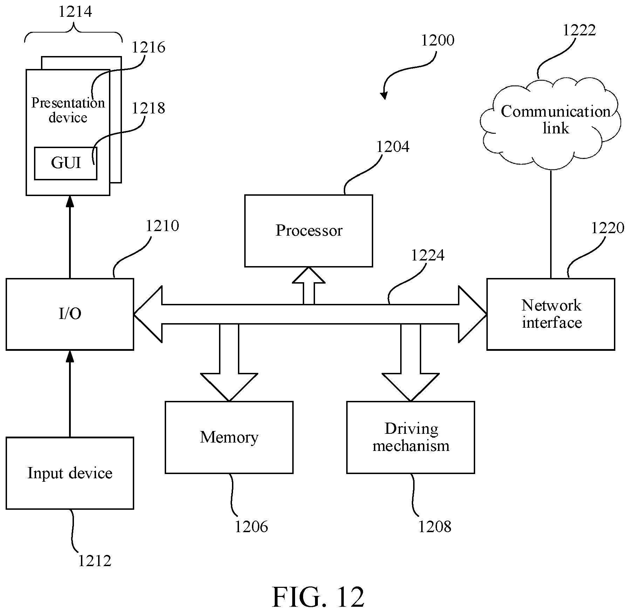

As shown in FIG. 12, in some embodiments of the present specification, a scheduling device 1200 is further provided. The scheduling device 1200 may include one or more processors 1204, for example, one or more central processing units (CPUs) or graphics processing units (GPUs), and each processing unit may implement one or more hardware thread. The scheduling device 1200 may further include any memory 1206 configured to store any type of information such as code, setting, and data. In a specific implementation, the memory 1206 stores a computer program executable on the processor 1204, and when being executed by the processor 1204, the computer program may execute instructions of the method. Unrestrictedly, for example, the memory 1206 may include any one or more combinations of the following: any type of RAM, any type of ROM, a flash device, a hard disk, a disc, and the like. More generally, any memory may store information by using any technology. Further, any memory may provide volatile or non-volatile retention of information. Further, any memory may represent a fixed or removable component of the scheduling device 1200. In a case, the scheduling device 1200 may perform any operation of associated instructions when the processor 1204 executes the associated instructions stored in any memory or combination of memories. The scheduling device 1200 further includes one or more driving mechanisms 1208 for interacting with any memory, for example, a hard disk driving mechanism and an optical disk driving mechanism.

The scheduling device 1200 may further include an input/output (I/O) interface 1210 for receiving various inputs (through an input device 1212) and for providing various outputs (through an output device 1214). A specific output mechanism may include a presentation device 1216 and an associated graphical user interface (GUI) 1218. In another embodiment, the scheduling device may alternatively not include an input/output (I/O) interface 1210, an input device 1212, and an output device 1214 and is only used as a computer device in a network. The scheduling device 1200 may further include one or more network interfaces 1220 configured to exchange data with another data through one or more communication links 1222. The foregoing described components are coupled together through one or more communication buses 1224.

The communication link 1222 may be implemented in any manner, for example, a local area network, a wide area network (for example, an Internet), point-to-point connection, or any communication thereof. The communication link 1222 may include any combination of a hard wired link, a radio link, a router, a gateway function, a name server, and the like governed by any protocol or combination of protocols.

For ease of description, when the apparatus is described, the apparatus is divided into units according to functions, which are separately described. Certainly, during implementation of this specification, the functions of the units may be implemented in the same piece of or a plurality of pieces of software and/or hardware. This application is described with reference to flowcharts and/or block diagrams of the method, the device (system), and the computer program product according to some embodiments of this specification. It should be understood that computer program instructions can implement each procedure and/or block in the flowcharts and/or block diagrams and a combination of procedures and/or blocks in the flowcharts and/or block diagrams. The computer program instructions may be provided for a general-purpose computer, a dedicated computer, an embedded processor, or a processor of another programmable data processor to generate a machine, so that the instructions executed by the computer or the processor of the another programmable data processor generate an apparatus for implementing a specific function in one or more procedures in the flowcharts and/or in one or more blocks in the block diagrams.

These computer program instructions may also be stored in a computer readable memory that can instruct the computer or any other programmable data processor to work in a specific manner, so that the instructions stored in the computer readable memory generate an artifact that comprises an instruction apparatus. The instruction apparatus implements a specific function in one or more processes in the flowcharts and/or in one or more blocks in the block diagrams.

These computer program instructions may be loaded onto a computer or another programmable data processor, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In typical configuration, a computer device includes one or more processors (CPU), an input/output interface, a network interface, and a memory.

The memory may include a form such as a volatile memory, a random-access memory (RAM) and/or a non-volatile memory such as a read-only memory (ROM) or a flash RAM in a computer-readable medium. The memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. Examples of a storage medium of a computer include, but are not limited to, a phase change memory (PRAM), a static random access memory (SRAM), a dynamic random access memory (DRAM), or other types of random access memory (RAM), a read-only memory (ROM), an erasable programmable read only memory (EEPROM), a flash memory or another storage technology, a compact disc read-only memory (CD-ROM), a digital versatile disc (DVD) or another optical storage, or a cartridge tape. A magnetic storage of a magnetic tape or a disc, another magnetic storage device, or any other non-transmission medium may be configured to store information that can be accessed by a computer device. Based on the description in the present disclosure, the computer-readable medium does not comprise transitory computer-readable media (transitory media), such as a modulated data signal and a carrier.

A person skilled in the art should understand that the embodiments of this specification may be provided as a method, a system, or a computer program product. Therefore, the embodiments of this specification may use a form of hardware-only embodiments, softwareonly embodiments, or embodiments with a combination of software and hardware. Moreover, the embodiments of this specification may use a form of a computer program product that is implemented on one or more computer-usable storage media (including but not limited to a disk memory, a CD-ROM, an optical memory, and the like) that include computer-usable program code.

The embodiments of this specification can be described in the general context of computer-executable instructions executed by a computer, for example, a program module. Generally, the program module includes a routine, a program, an object, a component, a data structure, and the like for executing a particular task or implementing a particular abstract data type. The embodiments of this specification may also be practiced in distributed computing environments in which tasks are performed by remote processors that are connected by using a communication network. In a distributed computing environment, the program module may be located in both local and remote computer storage media including storage devices.

The embodiments of this specification are all described in a progressive manner, for same or similar parts in the embodiments, refer to these embodiments, and descriptions of each embodiment focus on a difference from other embodiments. Especially, a system embodiment is basically similar to a method embodiment, and therefore is described briefly; for related parts, reference may be made to partial descriptions in the method embodiment. In the descriptions of this specification, descriptions of a reference term such as "an embodiment," "some embodiments," "an example," "a specific example," or "some examples" means that a feature, structure, material, or characteristic that is described with reference to the embodiment or the example is included in at least one embodiment or example of the embodiments of this specification. In the present specification, schematic representations of the above terms are not necessarily directed to the same embodiments or examples. Moreover, the specific features, structures, materials, or characteristics described may be combined in any one or more embodiments or examples in a suitable manner. In addition, different embodiments or examples described in the present specification, as well as features of different embodiments or examples, may be integrated and combined by those skilled in the art without contradicting each other.

The foregoing descriptions are merely embodiments of this application, and are not intended to limit this application. For a person skilled in the art, various modifications and variations can be made to this application. Any modification, equivalent replacement, or improvement made without departing from the spirit and principle of this application shall fall within the scope of the claims of this application.

## Claims

1. A multi-machine cooperation method, comprising:
at a first autonomous robot:
performing an operation on a ground in a working region, determining, when detecting an abnormal condition during operation, a working policy required to eliminate the abnormal condition, wherein the abnormal condition refers to an unexpected condition during the operation of the first autonomous robot, and determining, based on the working policy and a work type that can be processed by the first autonomous robot, whether the abnormal condition can be independently processed; and
when the abnormal condition cannot be independently processed, sending, by the first autonomous robot, an assistance request to another device in an Internet of Things in which the first autonomous robot is located.

2. The multi-machine cooperation method according to claim 1, wherein the first autonomous robot is an autonomous robot having a scheduling function, and the sending, by the first autonomous robot, an assistance request to another device in an Internet of Things in which the first autonomous robot is located comprises:
receiving, by the first autonomous robot, status information of the another device, and determining, according to the status information, whether there is a second autonomous robot that can independently process the abnormal condition in the Internet of Things; and
when there is the second autonomous robot that can independently process the abnormal condition in the Internet of Things, sending, by the first autonomous robot, a scheduling instruction to the second autonomous robot, wherein the scheduling instruction comprises a scheduling path for the second autonomous robot to reach a specified position, so that the second autonomous robot reaches the specified position according to the scheduling instruction to process the abnormal condition.

3. The multi-machine cooperation method according to claim 2, wherein the method further comprises:
receiving, by the first autonomous robot, a processed signal sent by the second autonomous robot, wherein the processed signal is sent by the second autonomous robot after processing the abnormal condition; and
sending, by the first autonomous robot, a return instruction to the second autonomous robot, wherein the return instruction comprises a return path for the second autonomous robot to return to a position before processing the abnormal condition, so that the second autonomous robot returns, according to the return instruction, to the position before processing the abnormal condition, to continue executing an interrupted operation of the second autonomous robot.

4. The multi-machine cooperation method according to claim 3, wherein the method further comprises:
when a waiting time after the first autonomous robot sends the scheduling instruction to the second autonomous robot reaches a preset waiting time, or when the first autonomous robot receives a reply signal fed back by the second autonomous robot, leaving, by the first autonomous robot, a target position at which the abnormal condition is detected and continuing executing the operation.

5. The multi-machine cooperation method according to claim 4, wherein the method further comprises:
when the first autonomous robot receives the processed signal sent by the second autonomous robot, returning, by the first autonomous robot, to the target position at a specified moment, and performing the operation on the target position or a region within a preset range of the target position.

6. The multi-machine cooperation method according to claim 2, wherein the step of determining, according to the status information, whether there is a second autonomous robot that can independently process the abnormal condition in the Internet of Things comprises:
determining, by the first autonomous robot according to the status information, whether there is an autonomous robot of which an executable work type matches a work type for eliminating the abnormal condition or a functional component matches a functional component for eliminating the abnormal condition in the another device, and if a result is yes, determining that the autonomous robot meets an assistance condition; and
if only one autonomous robot meets the assistance condition, determining the autonomous robot meeting the assistance condition as the second autonomous robot; or
if a plurality of autonomous robots meet the assistance condition, selecting, according to a first screening rule, one autonomous robot from the plurality of autonomous robots meeting the assistance condition as the second autonomous robot.

7. The multi-machine cooperation method according to claim 2, wherein the method further comprises:
when there is no second autonomous robot that can independently process the abnormal condition in the Internet of Things, calling, by the first autonomous robot, pre-stored position information of a working head station and a working head list of the working head station, wherein the working head station has a plurality of working head placement positions, at least one working head is pre-placed at each placement position, a working head identifier is set at each working head placement position or a working head identifier is set on each working head, and the working head identifier comprises a working head type or work type information that can be executed by a working head; and
when there is a working head that can eliminate the abnormal condition in the working head list, selecting, according to the feedback status information, an autonomous robot that can identify a working head identifier from the another device, and sending a replacement instruction to the autonomous robot, wherein the replacement instruction comprises a return path for the autonomous robot to move to the working head station and the working head identifier of the working head that can eliminate the abnormal condition, so that the autonomous robot mounts, according to the replacement instruction, the working head that can eliminate the abnormal condition.

8. The multi-machine cooperation method according to claim 1, wherein the first autonomous robot is an autonomous robot having a scheduling function, and the sending, by the first autonomous robot, an assistance request to another device in an Internet of Things in which the first autonomous robot is located comprises:
receiving, by the first autonomous robot, status information of the another device, and determining, according to the status information, whether there is a third autonomous robot that can assist in processing the abnormal condition in the Internet of Things; and
when there is the third autonomous robot that can assist in processing the abnormal condition in the Internet of Things, sending, by the first autonomous robot, a scheduling instruction to the third autonomous robot, wherein the scheduling instruction comprises a scheduling path for the third autonomous robot to reach a specified position, so that the third autonomous robot reaches the specified position according to the scheduling instruction, and the first autonomous robot processes the abnormal condition in cooperation with the third autonomous robot.

9. The multi-machine cooperation method according to claim 8, wherein the processing the abnormal condition in cooperation with the third autonomous robot comprises:
sending, by the first autonomous robot, an action instruction to the third autonomous robot; and
when the first autonomous robot receives receiving confirmation information returned by the third autonomous robot for the action instruction, performing, by the first autonomous robot and the third autonomous robot, an action corresponding to the action instruction according to the action instruction, so that the first autonomous robot and the third autonomous robot cooperatively process the abnormal condition.

10. The multi-machine cooperation method according to claim 8, wherein the method further comprises:
when there is no third autonomous robot that can assist in processing the abnormal condition in the Internet of Things, calling, by the first autonomous robot, pre-stored position information of a working head station and a working head list of the working head station, wherein the working head station has a plurality of working head placement positions, at least one working head is pre-placed at each placement position, a working head identifier is set at each working head placement position or a working head identifier is set on each working head, and the working head identifier comprises a working head type or work type information that can be executed by a working head; and
when there is a working head that can assist in processing the abnormal condition in the working head list, selecting, according to the feedback status information, an autonomous robot that can identify a working head identifier from the another device, and sending a replacement instruction to the autonomous robot, wherein the replacement instruction comprises a return path for the autonomous robot to move to the working head station and the working head identifier of the working head that can assist in processing the abnormal condition, so that the autonomous robot moves, according to the replacement instruction, to the working head station and mounts the working head that can assist in processing the abnormal condition.

11. The multi-machine cooperation method according to claim 1, wherein the first autonomous robot is an autonomous robot that does not have a scheduling function, and the sending, by the first autonomous robot, an assistance request to another device in an Internet of Things in which the first autonomous robot is located comprises:
sending, by the first autonomous robot, the assistance request to an autonomous robot having the scheduling function or a scheduling system, so that the autonomous robot having the scheduling function or the scheduling system determines a processing policy corresponding to the abnormal condition according to the assistance request, and when the processing policy is an independent processing policy, schedules, according to the independent processing policy, a second autonomous robot that can independently process the abnormal condition; and when the processing policy is a cooperative processing policy, schedules, according to the cooperative processing policy, a third autonomous robot that can assist in processing the abnormal condition.

12. The multi-machine cooperation method according to claim 1, wherein the determining, by the first autonomous robot when detecting an abnormal condition during operation, whether the abnormal condition can be independently processed comprises:
monitoring, by the first autonomous robot, an ambient environment during the operation;
if detecting the abnormal condition in the ambient environment, acquiring, by the first autonomous robot, information about the abnormal condition, and determining, based on the information about the abnormal condition, whether the abnormal condition affects normal running of the first autonomous robot, to determine whether the abnormal condition needs to be processed; and
if the abnormal condition needs to be processed, performing, by the first autonomous robot, the step of determining a working policy required to eliminate the abnormal condition and determining, based on the working policy and a work type that can be processed by the first autonomous robot, whether the abnormal condition can be independently processed.

13. The multi-machine cooperation method according to claim 1, wherein when the another device comprises an autonomous robot, the first autonomous robot sends the assistance request by using a v2v communication protocol.

14. A multi-machine cooperation method, comprising:
receiving an assistance request sent by a first autonomous robot, wherein the assistance request is sent when the first autonomous robot performs an operation on a ground in a working region, detects an abnormal condition during operation, and determines that the abnormal condition cannot be independently processed; and
sending a scheduling instruction to another device in an Internet of Things according to the assistance request, to process the abnormal condition.

15. The multi-machine cooperation method according to claim 14, wherein the sending a scheduling instruction to another device in an Internet of Things according to the assistance request comprises:
receiving status information of the another device, and determining, according to the status information, whether there is a second autonomous robot that can independently process the abnormal condition in the Internet of Things;
when there is the second autonomous robot that can independently process the abnormal condition in the Internet of Things, sending the scheduling instruction to the second autonomous robot, wherein the scheduling instruction comprises a scheduling path for the second autonomous robot to reach a specified position, so that the second autonomous robot reaches the specified position according to the scheduling instruction to process the abnormal condition;
when there is no second autonomous robot that can independently process the abnormal condition in the Internet of Things, calling pre-stored position information of a working head station and a working head list of the working head station, wherein the working head station has a plurality of working head placement positions, at least one working head is pre-placed at each placement position, a working head identifier is set at each working head placement position or a working head identifier is set on each working head, and the working head identifier comprises a working head type or work type information that can be executed by a working head; and
when there is a working head that can eliminate the abnormal condition in the working head list, selecting, according to the feedback status information, an autonomous robot that can identify a working head identifier from the another device, and sending a replacement instruction to the autonomous robot, wherein the replacement instruction comprises a return path for the autonomous robot to move to the working head station and the working head identifier of the working head that can eliminate the abnormal condition, so that the autonomous robot mounts, according to the replacement instruction, the working head that can eliminate the abnormal condition.

16. The multi-machine cooperation method according to claim 14, wherein the sending a scheduling instruction to another device in an Internet of Things according to the assistance request comprises:
receiving status information of the another device, and determining, according to the status information, whether there is a third autonomous robot that can assist in processing the abnormal condition in the Internet of Things;
when there is the third autonomous robot that can assist in processing the abnormal condition in the Internet of Things, sending the scheduling instruction to the third autonomous robot, wherein the scheduling instruction comprises a scheduling path for the third autonomous robot to reach a specified position, so that the third autonomous robot reaches the specified position according to the scheduling instruction, and the first autonomous robot processes the abnormal condition in cooperation with the third autonomous robot;
when there is no third autonomous robot that can assist in processing the abnormal condition in the Internet of Things, calling pre-stored position information of a working head station and a working head list of the working head station, wherein the working head station has a plurality of working head placement positions, at least one working head is pre-placed at each placement position, a working head identifier is set at each working head placement position or a working head identifier is set on each working head, and the working head identifier comprises a working head type or work type information that can be executed by a working head; and
when there is a working head that can assist in processing the abnormal condition in the working head list, selecting, according to the feedback status information, an autonomous robot that can identify a working head identifier from the another device, and sending a replacement instruction to the autonomous robot, wherein the replacement instruction comprises a return path for the autonomous robot to move to the working head station and the working head identifier of the working head that can assist in processing the abnormal condition, so that the autonomous robot moves, according to the replacement instruction, to the working head station and mounts the working head that can assist in processing the abnormal condition.

17. The multi-machine cooperation method according to claim 16, wherein the method further comprises:
in the cooperative processing process, simultaneously sending, according to an action corresponding to the abnormal condition, an action instruction corresponding to the action to the first autonomous robot and the third autonomous robot, to control synchronous action of the first autonomous robot and the third autonomous robot; and
when there are a plurality of actions, sending each action instruction according to an execution sequence of the actions corresponding to the abnormal condition, and sending a next action instruction after the first autonomous robot and the third autonomous robot completely execute an action corresponding to one action instruction; or selecting one of the first autonomous robot and the third autonomous robot as a main control robot, and simultaneously sending, by the main control robot according to an action corresponding to the abnormal condition, an action instruction corresponding to the action to the first autonomous robot and the third autonomous robot, to control synchronous action of the first autonomous robot and the third autonomous robot.

18. The multi-machine cooperation method according to claim 17, wherein the method further comprises:
pre-recording positions of the first autonomous robot and the third autonomous robot before processing the abnormal condition, and after receiving cooperative processing completion signals fed back by the third autonomous robot and the first autonomous robot for the abnormal condition, respectively sending a first return instruction to the first autonomous robot and a third return instruction to the third autonomous robot, wherein the first return instruction comprises the position of the first autonomous robot before processing the abnormal condition, and the third return instruction comprises the position of the third autonomous robot before processing the abnormal condition, so that the first autonomous robot and the third autonomous robot respectively return, according to the first return instruction and the third return instruction, to the positions before processing the abnormal condition, and the first autonomous robot and the third autonomous robot can respectively execute respective interrupted operations.

19. A scheduling device, comprising a memory, a processor, and a computer program stored on the memory, wherein the computer program, when executed by the processor, executes instructions of the method according to any of claims 1 to 18.

20. A multi-machine cooperation system, comprising a plurality of autonomous robots, wherein the plurality of autonomous robots are connected with each other to form an Internet of Things, and each autonomous robot in the Internet of Things implements multi-machine cooperation according to the method according to any one of claims 1 to 18.
